# EUROPÄISCHE PATENTSCHRIFT

(11) **EP 2 328 706 B1**
(45) Veröffentlichungstag und Bekanntmachung des Hinweises auf die Patenterteilung: **12.09.2018**
(21) Anmeldenummer: 09780208.6
(22) Anmeldetag: 07.07.2009
(51) Int. Cl.: B23D 49/16, B23D 51/20

(54) **ELEKTROHANDWERKZEUGMASCHINE**
ELECTRIC HAND POWER TOOL
MACHINE-OUTIL ÉLECTRIQUE

(30) Priorität: 29.08.2008 DE 102008041682
(43) Veröffentlichungstag der Anmeldung: 08.06.2011
(73) Patentinhaber: Robert Bosch GmbH, 70442 Stuttgart (DE)
(72) Erfinder: SINNER-HETTENBACH, Martin, 71277 Rutesheim (DE); LUTZ, Tobias, 70794 Filderstadt (DE)
(86) Internationale Anmeldenummer: PCT/EP2009/058542
(87) Internationale Veröffentlichungsnummer: WO 2010/023007

(56) Entgegenhaltungen:
- WO-A-2004/020134
- DE-A1- 3 408 847
- DE-A1- 3 543 764
- DE-A1- 3 714 237
- DE-U1- 8 706 162
- GB-A- 891 832
- JP-A- H03 117 513
- US-A- 3 204 470
- US-A- 3 206 989
- US-A- 3 388 728
- US-A- 4 240 204
- US-A- 4 512 078
- US-A- 4 628 605
- US-A1- 2002 008 445
- US-A1- 2008 208 232

## Beschreibung

### Stand der Technik

Die vorliegende Erfindung geht aus von einer Handwerkzeugmaschine nach dem Oberbegriff des Anspruchs 1.
Es sind sehr kompakt und klein bauende Akku-Handwerkzeugmaschinen mit Dreharbeitsbewegung zum Bohren, Schrauben, Fräsen, Polieren und Sägen in kleiner bis mittlerer Leistungsklasse bekannt.
Weniger kompakt sind bisher Handwerkzeugmaschinen der mittleren Leistungsklasse mit Translationsarbeitsbewegung ausgestaltet. Diese haben drehende Elektromotoren, die die für die bei Elektrowerkzeugen relevanten Anwendungen wie Sägen, Schleifen oder Schaben erforderliche Leistung haben. Deren Bauvolumen ist wegen des die Drehbewegung des Elektromotors in eine Translationsbewegung wandelnden Getriebes deutlich größer, als das von Handwerkzeugmaschinen mit Dreharbeitsbewegung, die ohne ein solches Getriebe auskommen. Weiter fehlt den Handwerkzeugmaschinen mit Translationsarbeitsbewegung das bisher nur sehr aufwendig realisierbare Merkmal eines variabel einstellbaren Arbeits-Hubes.
Die WO 2004/020134 A1 offenbart eine Elektrohandwerkzeugmaschine zum Anschluß an eine Spannungsquelle mit oszillierender Arbeitsbewegung, insbesondere Translationsbewegung eines Werkzeugs, wobei als Antriebsmittel ein sich unter elektrischer Spannung ausdehnender und/oder zusammenzichender Piezoaktor dient, der mechanisch mit dem Werkzeug und elektrisch mit der Spannungsquelle koppelbar ist.
Die US2002/0008445 A1 offenbart elekotraktive Polymere und elektroaktive Polymervorrichtungen.

Vorteil einer Elektrohandwerkzeugmaschine gemäß WO 2004/020134 A1 ist, dass die Handwerkzeugmaschine mit einem Antrieb verschen ist, der für die bei Handwerkzeugmaschinen praktisch benötigten Arbeitsbedingungen eine direkte Umsetzung elektrischer Energie in eine translatorische Bewegung mit dem erforderlichen einstellbaren Hub, Frequenz, Leistung und Wirkungsgrad ermöglicht.

### Offenbarung der Erfindung

Die Erfindung betrifft eine Elektrohandwerkzeugmaschine mit der Kombination von Merkmalen des unabhängigen Anspruchs 1. Vorteilhafte Ausführungsformen der Erfindung sind den abhängigen Ansprüchen zu entnehmen.

Dadurch, dass der Antrieb mit dielektrischen Elastomeren arbeitet, auch elektroaktive Polymere genannt, die sich bei angelegter Spannung um bis zu 30% einstellbar ausdehnen bzw. zusammenziehen, ist ein Hubantrieb realisierbar, der ohne besagte, die Drehbewegung eines Elektromotors in eine Translationsbewegung wandelnde Getriebe arbeitet.

Dadurch, dass der Antrieb aus Elastomeren realisiert ist, sind nicht nur dessen Arbeitsfrequenz sondern auch dessen Hub und damit die Auslenkungen des Werkzeugs der jeweiligen Handwerkzeugmaschine variierend einstellbar bzw. programmierbar.

Dadurch, dass der Antrieb in Gestalt einer Röhre aus dielektrischen Elastomeren mit einer Feder kombiniert ist, quasi einen "künstlichen Muskel" realisiert, bildet der Antrieb ein kompaktes Abtriebsmodul und erzeugt unmittelbar eine Hubbewegung des Werkzeugs.

Dadurch, dass der Antrieb in vorteilhaften Varianten mit unterschiedlicher Dicke und Wicklung des Elastomers versehen ist, können der Hub und die Hubkräfte auf die jeweils benötigte Leistung des Elektrowerkzeugs abgestimmt werden.

Dadurch, dass der Antrieb vorteilhaft entweder eine zentrische Abtriebsstange oder eine parallel gelagerte, mit dem Antrieb koppelbare Abtriebsstange hat, kann je nach Erfordernis eine kleinvolumige Sondervariante oder ein kostengünstiges, größervolumiges Standard-Antriebsmodul eingesetzt werden.

Dadurch, dass der Antrieb vorteilhaft in Verbindung mit Li-Ionen Akkus angewendet wird, ergibt sich ein sehr kompaktes Elektrowerkzeug mit Hubarbeitsbewegung zum Sägen, Schleifen, Feilen und Schaben usw.

Dadurch, dass die Hubstange der Stichsäge vorteilhaft pendelnd gelagert ist und mit einer Pendelhubmechanik kuppelbar ist, die der Hubstange während ihrer Hin- und Herbewegung eine Pendelbewegung, insbesondere beim Arbeitshub eine nach vorn gehende Pendelung, erteilt, wird die Schneidleistung besser.

Dadurch, dass die Hubstange vorteilhaft pendelnd gelagert ist und statt einer Pendelhubmechanik mit einem weiteren Elastomermodul koppelbar ist, das die Hubstange während ihrer Hin- und Herbewegung pendelnd antreibt, ist der Pendelhub zuverlässig und variabel steuerbar bzw. programmierbar.

Dadurch, dass die Hubstange vorteilhaft an ihrem oberen Ende ein Langloch hat, durch das hindurch eine Pendelachse tritt, um die die Hubstange in Vorschubrichtung pendelnd geführt ist, ist die Pendelung mit geringem Aufwand präzise und sicher erreichbar.

Dadurch, dass vorteilhaft mindestens eine Pendelrolle zur Abstützung am Sägeblattrücken zum Erteilen des Pendelhubs angeordnet ist, insbesondere synchron zur Hubbewegung der Hubstange, ist das Sägeblatt während des aktiven Pendelhubs im Werkstückeingriff besonders sicher geführt.

Dadurch, dass vorteilhaft die Pendelrolle über einen eigenen Antrieb, insbesondere ein Elastomermodul, angetrieben wird, ist der Pendelhub unabhängig vom Sägehub der Hubstange und auf diesen abgestimmt variabel regelbar.

### Zeichnung

Nachstehend ist die Erfindung anhand eines Ausführungsbeispiels mit zugehöriger Zeichnung näher erläutert.

Es zeigen
Figur 1 einen Längsschnitt einer erfindungsgemäßen Stichsäge ohne Pendelung
Figur 2 eine Stichsäge gemäß Figur 1 mit mechanischer Pendelung und
Figur 3 eine Stichsäge gemäß Figur 1 mit elektrischer Pendelung.

### Ausführungsbeispiel

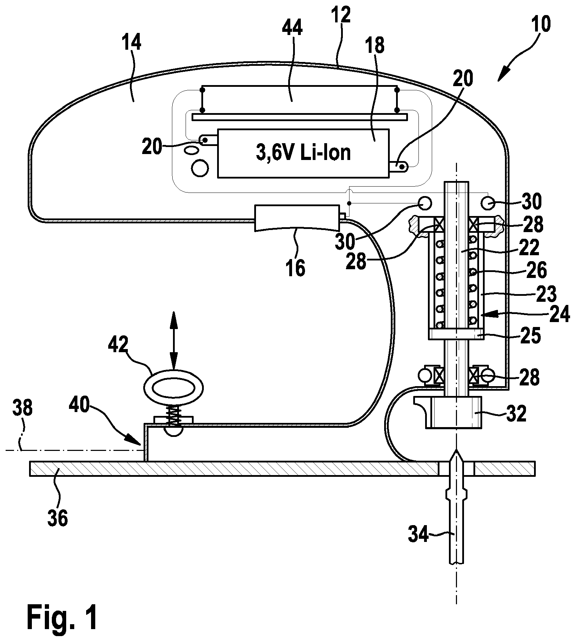

Die in Figur 1 im Längsschnitt dargestellte Akkustichsäge 10 hat ein Gehäuse 12 mit einem Pistolenhandgriff 14, der unten eine nach außen vorstehende Schalttaste 16 zum Ein- und Ausschalten des Antriebs 24 der Stichsäge 10 und innen einen Akku 18, insbesondere einen Li-Ionen-Akku, zum Betreiben des Antriebsmoduls 24 trägt. Das Gehäuse 12 ist auf einer Fußplatte 36 mit Drehgelenk 40 um eine die Vorschubrichtung bestimmende Schwenkachse 38 für Gehrungsschnitte in einem Winkelbereich von jeweils mindestens 45° nach jeder Seite für Gehrungsschnitte schwenkbar positionierbar gelagert. Die unterschiedlichen Schwenkpositionen des Gehäuses 12 gegenüber der Fußplatte 36 sind mittels nicht näher beschriebenen Arretiermitteln 42 lösbar arretierbar.

Das Antriebsmodul 24 besteht aus einem einen Tubus aus dielektrischem Elastomer enthaltenden, rohrartigen Elastomer-Modul 23. Dieses umgreift gemeinsam mit einer Feder 26 konzentrisch eine Hubstange 22 und stützt sich gemeinsam mit der Feder 26 axial an einem Kolben 25 ab, der mechanisch mit der Hubstange 22 gekoppelt ist, insbesondere diese konzentrisch und unverschieblich umgreift.

Das Elastomer-Modul 23 ist elektrisch mit dem Akku 18 gekuppelt, wobei zwischen den Akku 18 und das Elastomer-Modul 23 eine Elektronikeinheit 44 geschaltet ist, die die Spannung des Akkus 18 in eine Hochspannung umsetzt und dem Elastomer-Modul 23 zuordnet. Dieses zieht sich, z.B. nach Betätigen der Schalttaste 16, unter Hochspannung mit einstellbarem Hub zusammen oder dehnt sich dabei aus - bzw. nach Ausschalten der Hochspannung und/oder Kurzschliessen des Elastomers dehnt sich dieses gegen die Kraft der Feder 26 mit einstellbarem Hub aus bzw. zieht sich wieder zusammen - je nach Elastomer-Typ - und nimmt dabei den Kolben 25 und damit die Hubstange 22 geradverschiebend mit variabel einstellbarem Hub mit.

Bei über die Elektronikeinheit 44 oder dergl. entsprechend gesteuerter, anliegender Hochspannung arbeitet das Elastomer-Modul 23 hin- und hergehend und erteilt gemeinsam mit der Druckfeder 26 der Hubstange 22 der Stichsäge 10 eine für Hubsägearbeiten geeignete oszillierende Hubbewegung.

Die Hubstange 22 ist je in einem oberen und je einem unteren Hubstangenlager 28 auf- und abverschiebbar gelagert. Die Hubstange 22 trägt an ihrem unteren Ende eine an sich bekannte Spannvorrichtung 32 zur Halterung eines an sich bekannten Stichsägeblatts 34, das bei entsprechender Hubbewegung der Hubstange 22 zum Sägen eingesetzt werden kann.
Das Elastomer Modul 23 ist über die Schalttaste 16 mit dem Akku 18 und der nachgeschalteten Elektronikeinheit 44 elektrisch verbunden bzw. mittels Schalttaste 16 kurzschließbar. Die Stromversorgung kann dabei durch beliebige Akkutypen, bzw. mittels Netzspannung erfolgen.

Der Antrieb der Stichsäge kann, nicht erfindungsgemäß, mit zwei gegenläufig angeordneten Elastomer-Modulen dargestellt werden, die im Wechsel an eine Spannung angeschlossen werden und so die oszillierende Bewegung der Hubstange ohne zwischengeschaltete Feder realisieren.
Die Druckfeder 26 kann bei entsprechendem Elastomer-Typ auch als Zugfeder ausgestaltet sein.

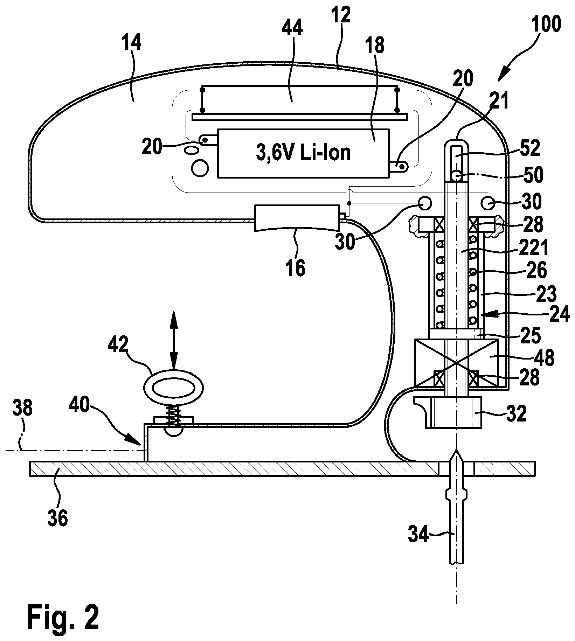

Die in Figur 2 dargestellte Stichsäge 100 stimmt im Wesentlichen mit der Stichsäge 10 gemäß Figur 1 überein und unterscheidet sich von dieser nur hinsichtlich einer der Hubstange 221 zugeordneten Pendelhubmechanik. Dazu ist die Hubstange 221 mit ihrem oberen verlängerten Ende 21 um eine gehäusefest, oben quer zur Schwenkachse 38 verlaufende Pendelachse 50 schwenkbar gelagert. Die Pendelachse 50 durchgreift dazu ein Langloch 52 im oberen Ende 21 der Hubstange 221, so dass diese bei Ihrer Auf- und Abbewegung zusätzlich in einer durch die Vorschubrichtung bestimmten Ebene pendelnd bewegbar ist. Dazu sind die Hubstangenlager 28 gemeinsam mit der Hubstange 22 und dem Antriebsmodul 24 mittels nur symbolisch dargestellter Pendelhubmechanik 48 antreibbar pendelnd im Gehäuse 12 gelagert, so dass die Hubstange 22 beim Aufwärtshub in Vorschubrichtung pendelt.

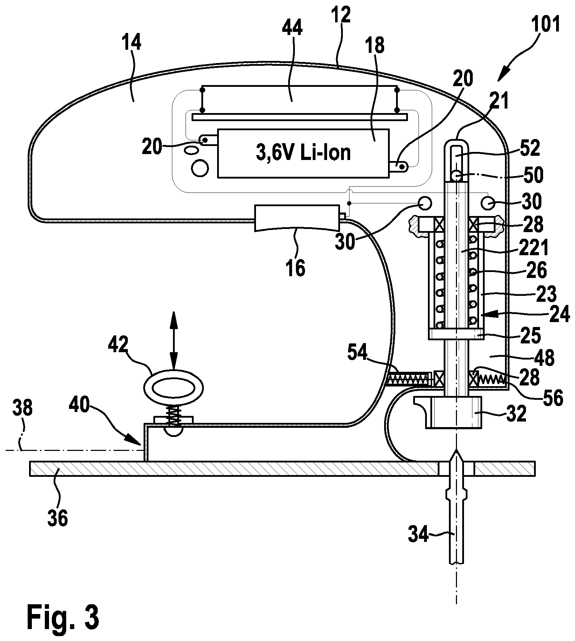

Die in Figur 3 dargestellte Stichsäge 101 unterscheidet sich von Stichsäge 10 gemäß Figur 1 nur hinsichtlich des Pendelantriebs der Hubstange 221. Statt einer Pendelhubmechanik ist dort ein zweites Elastomermodul in Gestalt eines Pendelmoduls 54 angeordnet. Dieses erteilt dem unteren Hubstangenlager 28 beim Aufwärtshub der Hubstange 22 eine Querbewegung mit einstellbarem Hub in Vorschubrichtung entgegen der Pendelfeder 56, so dass der Hubstange 22 beim Abwärtshub durch die Pendelfeder 56 der Rückhub erteilt wird. Dazu ist die Hubstange 221 mit ihrem oberen verlängerten Ende 21 um die gehäusefest, oben quer zur Schwenkachse 38 verlaufende Pendelachse 50 schwenkbar gelagert, die dazu das Langloch 52 im oberen Ende 21 der Hubstange 221 durchgreift.
Idealerweise haben die Stichsägen 10, 100 und 101 einen einstellbaren Hub von ca. 1 bis 10 mm, wobei der Akku 18 etwa 80 mm lang und die Hubstange mit integriertem Antriebsmodul 24 etwa 100 mm lang ist. Dadurch ergeben sich bei hohem Leistungspotential äußerst kompakte Abmessungen der Stichsägen. Vorzugweise haben die Stichsägen 100 und 101 eine Pendelrolle zur Abstützung am Sägeblattrücken zum Übertragen eines besonders effizienten Pendelhubs direkt auf das Sägeblatt.
Bei weiteren erfindungsgemäßen Varianten einer Stichsäge hat eine konventionell angetriebene Stichsäge anstelle einer Pendelmechanik ein Elastomer-Antriebsmodul oder eine Stichsäge mit Elastomer-Antriebsmodul zum Antrieb der Hubstange hat einen Piezoantrieb für die Pendelung der Hubstange. Zum Erzeugen hin- und hergehender Drehbewegungen einer Abtriebswelle zum Schleifen und Sägen können entsprechend angeordnete Elastomermodule mit nachgeschalteten Hubstangen-Getrieben auch zum Ersatz eines herkömmlichen Motors mit Exzentergetriebe verwendet werden.
Die Anwendung der Elastomer-Antriebsmodule ist auch für den Antrieb eines Schabers oder die Erzeugung der Hin- und Herbewegung einer Bohrhammer-Abtriebswelle zum Meisseln von Vorteil.

In einer weiteren, vorteilhaften Ausführungsform hat ein Werkzeug bei niedrigen Amplituden hohe Auslenkungsfrequenzen und bei hohen Amplituden niedrige Auslenkungsfrequenzen - abhängig von der Höhe der angelegten Spannung und der daraus resultierenden Steifigkeit des Elastomers. Eine solche Auslegung erlaubt den Einsatz vielfältiger Arbeitswerkzeuge, beispielsweise Sägeblätter, Schleifvorsätze, Meißel und Schabereinsätze.

## Patentansprüche

1. Elektrohandwerkzeugmaschine (10, 100, 101) zum Anschluß an eine Spannungsquelle mit oszillierender Arbeitsbewegung, insbesondere Translationsbewegung eines Werkzeugs (34), wobei ein Antriebsmittel vorgesehen ist, das sich unter elektrischer Spannung ausdehnt und/oder zusammenzieht und das mechanisch mit dem Werkzeug (34) und elektrisch mit der Spannungsquelle koppelbar ist, **dadurch gekennzeichnet, dass** das Antriebsmittel aus einem einen Tubus aus dielektrischem Elastomer enthaltenden, rohrartigen Elastomermodul (23) besteht, wobei das Elastomermodul (23) zwecks Hin- und Herbewegung des Werkzeugs (34) mit einer Druckfeder (26) und/oder einer Zugfeder gekoppelt ist, wobei das Elastomermodul (23) gemeinsam mit der Druckfeder (26) und/oder der Zugfeder (26) konzentrisch eine Hubstange (22) umgreift und sich gemeinsam mit der Feder (26) axial an einem mechanisch mit der Hubstange (22) gekoppelten Kolben (25) abstützt.

2. Elektrohandwerkzeugmaschine nach Anspruch 1, **dadurch gekennzeichnet, dass** sie als Stichsäge (10) ausgestaltet ist, deren Hubstange (22) mit dem Elastomermodul (23) gekuppelt ist.

3. Elektrohandwerkzeugmaschine nach Anspruch 1, **dadurch gekennzeichnet, dass** Amplituden und Arbeitsfrequenzen einer Hubstange (22) variabel einstellbar sind, insbesondere für Säge- und/oder Schleifmaschinen vorzugsweise programmierbar sind.

4. Elektrohandwerkzeugmaschine nach Anspruch 2, **dadurch gekennzeichnet, dass** die Hubstange (22) der Stichsäge (10) pendelnd gelagert ist und mit einer Pendelhubmechanik (48) kuppelbar ist, die der Hubstange (22) während ihrer Hin- und Herbewegung eine Pendelbewegung, insbesondere beim Arbeitshub eine nach vorn gehende Pendelung, erteilt.

5. Stichsäge nach Anspruch 2, **dadurch gekennzeichnet, dass** die Hubstange (22) pendelnd gelagert ist und statt einer Pendelhubmechanik (48) mit einem weiteren Elastomermodul (54) koppelbar ist, das die Hubstange (22) während ihrer Hin- und Herbewegung pendelnd antreibt.

6. Stichsäge nach Anspruch 4 oder 5, **dadurch gekennzeichnet, dass** die Hubstange (22) an ihrem oberen Ende ein Langloch (52) hat, durch das hindurch eine Pendelachse (50) tritt, um die die Hubstange (22) in Vorschubrichtung pendelbar geführt ist.

7. Stichsäge nach Anspruch 3, **dadurch gekennzeichnet, dass** mindestens eine Pendelrolle zur Abstützung am Sägeblattrücken zum Erteilen des Pendelhubs angeordnet ist, insbesondere synchron zur Hubbewegung der Hubstange (22).

8. Stichsäge nach Anspruch 6, **dadurch gekennzeichnet, dass** die Pendelrolle über einen eigenen Antrieb, insbesondere über ein Elastomermodul (23, 54), pendelnd angetrieben wird.

## Claims

1. Handheld electric power tool (10, 100, 101) for connection to a voltage source with an oscillating working movement, in particular translation movement of a tool (34), wherein a drive means is provided which expands and/or contracts under electrical voltage and which can be coupled mechanically to the tool (34) and electrically to the voltage source, **characterized in that** the drive means consists of a tubular elastomeric module (23) which contains a tube which is composed of dielectric elastomer, wherein the elastomeric module (23) is coupled to a compression spring (26) and/or a tension spring for the purpose of moving the tool (34) to and fro, wherein the elastomeric module (23), together with the compression spring (26) and/or the tension spring (26), engages concentrically around a lifting rod (22) and, together with the spring (26), is supported axially on a piston (25) which is mechanically coupled to the lifting rod (22).

2. Handheld electric power tool according to Claim 1, **characterized in that** it is embodied as a jigsaw (10), the lifting rod (22) of which is coupled to the elastomeric module (23).

3. Handheld electric power tool according to Claim 1, **characterized in that** amplitudes and working frequencies of a lifting rod (22) can be variably adjusted, preferably can be programmed for sawing and/or grinding machines in particular.

4. Handheld electric power tool according to Claim 2, **characterized in that** the lifting rod (22) of the jigsaw (10) is mounted in a swinging manner and can be coupled to a pendulum stroke mechanism (48) which confers a swinging movement, in particular a forward swing during the working stroke, on the lifting rod (22) during its to and fro movement.

5. Jigsaw according to Claim 2, **characterized in that** the lifting rod (22) is mounted in a swinging manner and, instead of a pendulum stroke mechanism (48), can be coupled to a further elastomeric module (54) which drives the lifting rod (22) in a swinging manner during its to and fro movement.

6. Jigsaw according to Claim 4 or 5, **characterized in that** the lifting rod (22) has an elongate hole (52) at its upper end, a pendulum axis (50) around which the lifting rod (22) is guided in a swinging manner in the feed direction passing through the said elongate hole.

7. Jigsaw according to Claim 3, **characterized in that** at least one pendulum roller for being supported on the saw blade back is arranged for conferring the pendulum stroke, in particular synchronously in relation to the lifting movement of the lifting rod (22).

8. Jigsaw according to Claim 6, **characterized in that** the pendulum roller is driven in a swinging manner by means of a dedicated drive, in particular by means of an elastomeric module (23, 54).

## Revendications

1. Machine-outil électrique manuelle (10, 100, 101) à raccorder à une source de tension avec un mouvement de travail oscillant, en particulier un mouvement de translation d'un outil (34), dans laquelle il est prévu un moyen d'entraînement, qui se dilate et/ou qui se contracte sous une tension électrique et qui peut être couplé mécaniquement à l'outil (34) et électriquement à la source de tension, **caractérisé en ce que** le moyen d'entraînement se compose d'un module élastomère tubulaire (23) contenant un tube en élastomère diélectrique, dans laquelle le module élastomère (23) est couplé pour le mouvement de va-et-vient de l'outil (34) à un ressort de pression (26) et/ou à un ressort de traction, dans laquelle le module élastomère (23) entoure de façon concentrique, conjointement au ressort de pression (26) et/ou au ressort de traction (26), une tige de course (22) et s'appuie en même temps que le ressort (26) axialement sur un piston (25) mécaniquement couplé à la tige de course (22).

2. Machine-outil électrique manuelle selon la revendication 1, **caractérisée en ce qu'**elle est constituée par une scie sauteuse (10), dont la tige de course (22) est couplée au module élastomère (23).

3. Machine-outil électrique manuelle selon la revendication 1, **caractérisé en ce que** des amplitudes et des fréquences de travail d'une tige de course (22) sont réglables de façon variable, sont de préférence programmables, en particulier pour des scies et/ou des ponceuses.

4. Machine-outil électrique manuelle selon la revendication 2, **caractérisée en ce que** la tige de course (22) de la scie sauteuse (10) est montée de façon oscillante et peut être couplée à un mécanisme de course oscillant (48), qui imprime à la tige de course (22), pendant son mouvement de va-et-vient, un mouvement oscillant, en particulier un mouvement oscillant dirigé vers l'avant lors de la course de travail.

5. Scie sauteuse selon la revendication 2, **caractérisée en ce que** la tige de course (22) est montée de façon oscillante et peut être couplée à, au lieu d'un mécanisme de course oscillant (48), un autre module élastomère (54), qui entraîne la tige de course (22) en oscillation pendant son mouvement de va-et-vient.

6. Scie sauteuse selon la revendication 4 ou 5, **caractérisée en ce que** la tige de course (22) présente à son extrémité supérieure un trou oblong (52), à travers lequel passe un axe d'oscillation (50), autour duquel la tige de course (22) est guidée de façon oscillante dans la direction d'avance.

7. Scie sauteuse selon la revendication 3, **caractérisée en ce qu'**au moins un rouleau oscillant d'appui est disposé au dos de la lame de scie pour imprimer la course oscillante, en particulier en synchronisme avec le mouvement de levée de la tige de course (22).

8. Scie sauteuse selon la revendication 6, **caractérisée en ce que** le rouleau oscillant est entraîné en oscillation par un entraînement particulier, notamment par un module élastomère (23, 54).
